# EUROPEAN PATENT SPECIFICATION

(11) **EP 3 199 071 B1**
(45) Date of publication and mention of the grant of the patent: **08.05.2019**
(21) Application number: 16153018.3
(22) Date of filing: 27.01.2016
(51) Int. Cl.: A47J 31/36

(54) **SYSTEM FOR PREPARING A LIQUID BEVERAGE FROM A CAPSULE**
SYSTEM ZUR HERSTELLUNG EINES FLÜSSIGEN GETRÄNKS AUS EINER KAPSEL
SYSTÈME POUR PRÉPARER UNE BOISSON LIQUIDE À PARTIR D'UNE CAPSULE

(43) Date of publication of application: 02.08.2017
(73) Proprietor: Koninklijke Douwe Egberts B.V., 3532 AD Utrecht (NL)
(72) Inventor: Van Loon-Post, Angenita Dorothea, 3532 AD Utrecht (NL); Kamerbeek, Ralf, 3532 AD Utrecht (NL); De Graaff, Gerbrand Kristiaan, 3532 AD Utrecht (NL)
(74) Representative: V.O.

(56) References cited:
- EP-A1- 1 967 099
- EP-A1- 2 071 988
- EP-A1- 2 412 646

## Description

The invention relates to a system for preparing a liquid beverage from a capsule, said system comprising a device, the latter including:
- a feeding unit for feeding injection fluid into the capsule, wherein said liquid is provided by a pump of the device;
- a control unit for controlling at least the pump of the device;
- decoding means communicatively connected to the control unit and designed to read information from encoding means;
- said system further comprising a capsule holder and a capsule comprising an inlet surface, said capsule holder being configured to so as to receive and support the capsule;
- said capsule being configured to be housed in the capsule holder, said inlet surface being arranged for receiving injection liquid from the feeding unit;
- said feeding unit comprising an injection needle for supplying the injection fluid as a jet, said injection needle being able to move relative to the capsule holder from a rest position to an operating position;
- said capsule holder being detachable from the feeding unit and movable from an operating position in the feeding unit to a rest position outside the feeding unit;
- said feeding unit comprising insertion means which permits the insertion of the capsule holder from its detached position into its injection position in the feeding unit, said insertion means comprises ribs which are associated with guide grooves which are wedge-shaped.

Such a system is known from EP-A-1 967 100 or EP-A-1 967 099. The invention in particular relates to such systems marketed under the name Dolce Gusto ® and at the present moment sold e.g. by Krups as espresso machines known as Dolce Gusto Genio, Dolce Gusto Picollo, Dolce Gusto Creativa, Dolce Gusto Circolo, Dolce Gusto Fontana and Dolce Gusto Melody. The capsules to be used in these machines are specifically configured to be used in these machines only and are configured for the preparation of a beverage by injection of the injection liquid under pressure. In addition these machines can only operate properly when the system is equipped with a specifically configured capsule holder having encoding means which can be read by the decoding means of the device. Said specifically configured capsule holder comprises complementary insertion means having ribs associated with guide grooves which are wedge-shaped. The capsule comprises as inlet surface an injection surface in the form of a flexible membrane which is attached to an upper peripheral edge of the cup of the capsule. In operation position of the capsule in the specifically configured capsule holder and in operating position of the specifically configured capsule holder in the feeding unit the injection surface is punctured by the injection needle of the feeding unit. The capsule further comprises a closed chamber containing the extractable and/or soluble substance in which the injection of the injection fluid is carried out. Furthermore the capsule comprises opening means in the form of at least one puncturing element for opening the capsule under the effect of the rise in pressure in the chamber. The inclination formed by the wedge-shaped insertion means ensures that the injection surface of the capsule, once inserted in the operating position, is positioned with a few degrees of inclination relative to the horizontal. This inclination serves to reduce considerably, or even to eliminate, the occurrence of resurgence by keeping the capsule inclined and maintaining a volume of gas and/or air around the point of injection, which has the result that when removing the injection needle, a sufficient volume of gas and/or air escapes instead of pressurised liquid. Although customers using this system are quite satisfied with its operation, one of the main disadvantages experienced by customers is that only capsules and/or capsule holders which are specifically configured can be used in this known system.

It is therefore an object of the present invention to meet the demands of the customers and to provide a system for preparing a liquid beverage from a capsule, in which the customers can use a large variety of capsules containing an extractable substance and/or a soluble substance and a large variety of capsule holders can be used without detriment to the operation of the device.

According to the invention this object is achieved in that a system for preparing a liquid beverage from a capsule of the sort defined above is characterized in that said capsule holder is configured so as to position the inlet surface of a capsule housed in the capsule holder in the operating position at a position in which the inlet surface is free from contact with the injection needle when the latter is in the operating position. Consequently a customer is provided with the possibility of using an alternative capsule holder and/or an alternative capsule in e.g. the existing Dolce Gusto® devices as mentioned above, in which in the operating position there is no contact between the capsule inlet surface and the injection needle in the operating position.

In an embodiment of a system for preparing a liquid beverage from a capsule according to the invention this can be realized when said capsule holder has a top surface and is provided with means so as to position the inlet surface of a capsule housed in the capsule holder in the operating position in a horizontal position, said capsule holder being provided with means so as to position the top surface of the capsule holder in the operating position in a horizontal position. In that case the means to position the inlet surface of a capsule housed in the capsule holder in a horizontal position and the means to position the top surface of the capsule holder in a horizontal position are preferably formed by one and the same means

In a further embodiment of a system for preparing a liquid beverage from a capsule according to the invention the capsule holder is provided with supplementary insertion means comprising guiding ribs having a constant thickness and / or guiding grooves having a constant dimension transverse to the direction of insertion into the feeding unit. Such a capsule holder can be manufactured easily and these measures result therein that the capsule holder is not positioned in the feeding unit in an operating position along a plane which is inclined to the horizontal. In addition the capsule holder does not have a guide-rib and / or a guide groove portion comprising a variable thickness, and thus does not form a wedge-shaped linear insertion means.

In yet another embodiment of a system for preparing a liquid beverage from a capsule according to the invention the capsule holder comprises a lid having an injection member, said lid being movable from a rest position in which a capsule can be received in the capsule holder to an operating position in which the lid together with the capsule holder encloses a capsule housed in the capsule holder, said lid being arranged for receiving injection fluid from the injection needle in the operating position, and said injection member supplying the injection liquid to the capsule. Such a lid e.g. can be used to prevent that the injection needle penetrates an alternative capsule in the operating position of the capsule holder in the feeding unit and interferes with the proper functioning thereof. Preferably said lid is hinged to the capsule holder, but the lid can in addition or alternatively also be removable and/or detachable from the capsule holder.

In a preferred embodiment of such a system for preparing a liquid beverage from a capsule according to the invention the lid comprises additional insertion means which, in the operating position of the lid together with the supplementary insertion means form a combined insertion means which are complementary to the insertion means of the feeding unit, so that the capsule holder with the lid in operating position can easily be inserted in the feeding unit.

In yet another embodiment of a system for preparing a liquid beverage from a capsule according to the invention said injection member has a liquid inlet and a jet redirection element, said liquid inlet being positioned such that in the operating position of the lid with regard to the capsule holder and in the operating position of the capsule holder in the feeding unit and in the operating position of the injection needle, the injection needle at least partly extends in the liquid inlet, said jet redirection element redirecting the jet such that the injection liquid is delivered at the centre of a capsule housed in the capsule holder and directed along the axial axis of the capsule. In this way the injection member can e.g. be configured to supply the injection liquid to an alternative capsule in a manner which is best suitable for such an alternative capsule.

In an alternative embodiment of a system for preparing a liquid beverage from a capsule according to the invention said injection member has a liquid inlet communicating with a common manifold opening into one or more injection holes opposite the liquid inlet, said liquid inlet being positioned such that in the operating position of the lid with regard to the capsule holder and in the operating position of the capsule holder in the feeding unit and in the operating position of the injection needle, the injection needle at least partly extends in the liquid inlet. In this way the injection member can be configured to supply the injection liquid to an alternative capsule in a manner which is best suitable for such an alternative capsule. Preferably the injection member then has one injection hole, said injection hole in the operating position being positioned in the extension of the centre of a capsule housed in the capsule holder. Alternatively said injection member has a plurality of injection holes, at least one of these injection holes in the operating position being positioned in the extension of the centre of a capsule housed in the capsule holder. In these latter two cases the injection fluid is at least centrally or axially introduced into the capsule, which can e.g. promote the solubility of the substance contained in the capsule. For some substances contained in the capsules it may be advantageous when the injection hole or holes are arranged such that the liquid dispensed therefrom is directed along or parallel to the axial axis of a capsule housed in the capsule holder.

In still yet another embodiment of a system for preparing a liquid beverage from a capsule according to the invention the injection member is configured such that in the operating position of the lid with regard to the capsule holder and in the operating position of the capsule holder in the feeding unit and in the operating position of the injection needle it releases the injection liquid outside a capsule housed in the capsule holder, wherein the injection member is preferably configured for releasing the injection liquid above the capsule. In this manner it is e.g. possible to place a pad containing an extractable and/or soluble substance in the capsule holder, while still being able to provide a correct beverage when the capsule holder with this pad is positioned in the operating position in the feeding unit of the device.

In still a further embodiment of a system for preparing a liquid beverage from a capsule according to the invention, wherein the feeding unit of the device comprises an injection surface, in the operating position of the lid with regard to the capsule holder and in the operating position of the capsule holder in the feeding unit and in the operating position of the injection needle, the capsule holder, preferably an edge thereof, is sealed against the injection surface. In this way it can be prevented that the usual force with which the injection surface in operating position seals against the capsule is reduced or even removed at all, so that any interference with the proper functioning of the capsule caused by the sealing of the sealing surface against the capsule is reduced or prevented.

In another advantageous embodiment of a system for preparing a liquid beverage from a capsule according to the invention the lid is configured such that in the operating position of the lid with regard to the capsule holder the lid is free from contact with a capsule housed in the capsule holder or the lid contacts the capsule in a non-sealing manner. In this manner the lid does not interfere with the proper functioning of the capsule when in the operating position.

In case the capsule holder comprises a lower portion positioned in the operating position of the lid with regard to the capsule holder below the lid, and the capsule comprises a lower portion and/or a flange, and in the operating position of the lid with regard to the capsule holder the lower portion of the capsule holder seals against the lid of the capsule holder and the lower portion of the capsule holder seals against the lower portion and/or the flange of the capsule, a correct functioning of the system can be obtained without a sealing of the capsule against the injection surface or the lid. According to the invention in the operating position of the capsule holder in the feeding unit and in the operating position of the injection needle the capsule housed in the capsule holder is free from contact with the injection surface. In this manner deformation of a capsule in the capsule holder by the injection surface, e.g. as a result of which the volume of the capsule is reduced, is prevented.

Preferably the capsule holder comprises an upstanding edge which is situated above a capsule when the capsule is housed in the capsule holder, wherein in case the capsule holder comprises a lid said upstanding edge is separate from the lid, and in the operating position of the capsule holder in the feeding unit the upstanding edge of the capsule holder seals against the injection surface of the feeding unit. In this manner there is not provided a seal between the feeding unit of the device and the inlet surface of the capsule, which provides the possibility of using a variety of capsules.

In a further embodiment of a system for preparing a liquid beverage from a capsule according to the invention the capsule holder is free from encoding means, such as a magnet, making the use of relative cheap capsule holders possible. For the cooperation with the decoding means of the device the system may comprise separate, i.e. loose, encoding means. Preferably the separate encoding means is free from guiding means, and may be realized in the form of a small magnet which is not self guiding towards a position in or on the device in which it is communicatively connected to the decoding means, i.e. the encoding means can be positioned relative to the decoding means such that the decoding means is able to read information from the encoding means.. For example, such a small magnet may be correctly manually positioned inside the device, or to an outer portion of the device.

In a still further embodiment of a system for preparing a liquid beverage from a capsule according to the invention wherein said capsule comprises an outlet face opposite the capsule inlet surface and a cup having an upper peripheral surface, the capsule holder comprises means for opening the outlet face of the capsule, said means being arranged for exerting an external force, such as a mechanical force or fluid pressure, on the outlet face of the capsule. In this manner capsules can be used which are not self opening under internal pressure or water filling, and thus also capsules can be used which are not provided with internal puncturing means. In addition since the capsule holder comprises the means for opening the outlet face of the capsule, the capsules can be manufactured at lower costs. Preferably the means for opening the outlet face of the capsule by external forces is arranged for providing an opening in the outlet face having a surface of at least 9 mm², preferable at least 12 mm², and most preferably of at least 15 mm². Thus the means for opening the outlet face upon opening of the capsule provide a large opening through which the extracted substance can flow, and consequently capsules can be used which are not configured to retain internal pressure in the capsule, as a result of which capsules to be used in the device can be manufactured at even lower costs. Preferably said means for opening the outlet face of the capsule is integrated in the capsule holder, but alternatively said means for opening the outlet face of the capsule can be removably positionable in the capsule holder. In an advantageous, relatively simple embodiment of a system for preparing a liquid beverage from a capsule according to the invention said means for opening the outlet face of the capsule by mechanical forces then has the general shape of a contoured plate comprising protrusions, such as pyramids and/or points, frustums of pyramids, stepped pyramids or frustums thereof.

An economical and relatively simple system for preparing a liquid beverage from a capsule according to the invention is realized when the capsule consists of the capsule inlet surface, the cup, the outlet face, and an extractable and/or soluble substance, preferably the outlet face of the capsule is formed by a valve. In this manner a capsule to be used in the system is not provided with internal means, such as a valve for selectively blocking the flow path from a (lower) face of the capsule to an outlet of the capsule and/or internal perforation means designed for opening the lower face under the influence of pressure, or filters. In addition a capsule to be used in the device is not provided with valve means which is arranged to co-operate with a wall of the capsule, and thus in this manner a capsule which are relatively cheap and easy to manufacture can be used in the device and system according to the invention.

In case the capsule inlet surface is spaced from the upper peripheral surface in the direction towards the outlet face, thus forming a lowered capsule inlet surface, a capsule can be used which does not provide a seal (at least locally and directly) between the injection surface of the feeding unit and the inlet surface of the capsule. Consequently a capsule to be used in the device neither needs to be constructed so that the inlet surface of the capsule is pierced by the injection needle nor that the internal volume of the capsule is reduced by deforming the inlet surface of the capsule. A proper functioning of such a capsule in the device is then realized when the upper peripheral surface is used as sealing surface in the operating position of the capsule holder in the feeding unit. This can preferably by realized when the capsule inlet surface is concave and/or comprises one or a plurality of holes.

In still another embodiment of a system for preparing a liquid beverage from a capsule according to the invention the capsule inlet surface is rigid, and thus the inlet surface needs not to be manufactured with a flexible membrane which is configured to hermetically seal the capsule during normal handling on the one hand and to be perforated by an injection needle on the other hand.

Preferably the capsule inlet surface and/or the outlet face are arranged to be opened manually, e.g. they can be formed by tearable or removable flexible or rigid elements.

In an extremely versatile embodiment of a system for preparing a liquid beverage from a capsule according to the invention, the system further comprises a second capsule holder, said second capsule holder being detachable from the feeding unit and movable from an operating position in the feeding unit to a rest position outside the feeding unit, said second capsule holder comprising complementary insertion means configured to permit the insertion of the second capsule holder from its rest position into its operating position in the feeding unit, said complementary insertion means being complementary to the insertion means of the feeding unit. Preferably the complementary insertion means of the second capsule holder then comprises ribs associated with guide grooves, the complementary insertion means preferably being wedge-shaped, substantially linear guides means, and the capsule inlet surface is then preferably inclined relative to the axial axis of the capsule such that the inlet surface when it is housed in the capsule holder is in a horizontal position when the capsule holder is in the operating position. In this extremely versatile embodiment thus also the existing capsules can be used.

Further features and advantages of the present invention will appear from reading the description which follows, provided by way of nonlimiting example and with reference to the accompanying drawings, in which:
Figure 1 is a general simplified view of a system for preparing a liquid beverage from a capsule according to the invention;
Figure 2 is a cross-sectional view along the longitudinal median axis of the feeding unit of a device of the system of Figure 1 showing the wedge-shaped insertion means;
Figure 3 is a cross-sectional view along the longitudinal median axis of an embodiment of the system in which the feeding unit and the capsule holder according to the invention are arranged in the operating position;
Figure 4 is a cross-sectional view partly in perspective of an embodiment of the system in accordance with the invention in which the capsule holder comprises a lid;
Figure 5A is a cross-sectional view of a lid of an embodiment of a capsule holder according to the invention;
Figure 5B is a cross-sectional view of a lid of another embodiment of a capsule holder according to the invention;
Figure 6 is a cross-sectional view along the longitudinal median axis of an embodiment of the system in which the feeding unit and the capsule holder comprising a lid according to the invention are arranged in the operating position;
Figure 7 is a cross-sectional view along the longitudinal median axis of an embodiment of the system according to the invention in which the bottom surface of the lid of a capsule holder is spaced from the inlet surface of the capsule in the operating position;
Figure 8 is a cross-sectional view along the longitudinal median axis of an embodiment of the system according to the invention showing part of a capsule holder, a removable opening means and a capsule;
Figure 9 is a cross-sectional view partly in perspective of an embodiment of the system in accordance with the invention in which the capsule has a lowered inlet surface;
Figure 10 is a cross-sectional view partly in perspective of an alternative embodiment of the system in accordance with the invention in which the capsule has a lowered inlet surface;
Figure 11 is a cross-sectional view partly in perspective of a further embodiment of the system in accordance with the invention in which the capsule has a concave inlet surface;
Figure 12 is a cross-sectional view of an embodiment of the system in accordance with the invention in which the capsule inlet surface is inclined relative to the axial axis of the cup of the capsule;
Figure 13 shows an embodiment of separate or loose encoding means in the form of an elliptical magnet;
Figure 14 is a perspective view of an embodiment of the system in which the feeding unit and a second capsule holder according to the invention are arranged in the operating position; and
Figure 15 is a cross-sectional view along the longitudinal median axis of the embodiment shown in Figure 14 in which a capsule as shown in Figure 12 is housed.

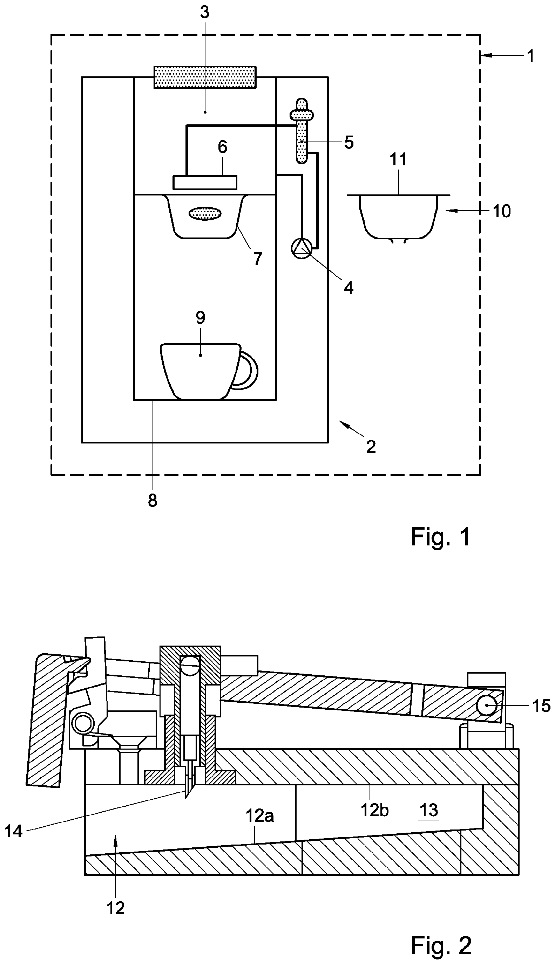

Figure 1 shows in simplified form a system 1 for preparing a liquid beverage from capsules comprising a device or an appliance 2 and capsules 10. The liquid may be a hot or cold beverage such as coffee, cappuccino or tea.

The device 2 includes a feeding unit 3 for feeding injection fluid into the capsule 10 when the capsule is positioned in the device 2. The liquid is provided by a pump 4 of the device 2. The device 2 further includes a control unit 5 for controlling at least the pump 4 of the device 2.

In addition decoding means 6 are present which are communicatively connected to the control unit 5 and which decoding means 6 are designed to read information from encoding means which are described later.

The system 1 further comprises a capsule holder 7 which is configured so as to receive and support the capsule 10. Furthermore the capsule holder 7 is detachable from the feeding unit 3 and is movable from an operating position within the feeding unit 3 to a rest position outside the feeding unit 3.

Under the capsule holder 7 a service zone is arranged which can comprise a platform 8 on which a cup 9 can be placed. The device 2 comprises, moreover, a water reservoir such as a removable reservoir, associated with the pump, a water heater and a fluid circuit permitting the fluid supply unit 3 to be supplied with hot and/or cold water according to requirements. A more or less sophisticated control means is present permitting the user to select according to e.g. a predetermined selective choice a plurality of options for hot and/or cold beverages and/or a plurality of volumes of beverages to be prepared. The control means may be associated with the control unit 5 which selectively controls the start-up of the pump 4, the water heater and valve(s) associated with the fluid circuit. The control means may be a means of the lever type or one or more control buttons. For the sake of clarity not all these components of the device have been indicated in Figure 1.

The capsule 10 of the system 1 comprises an inlet surface 11 and is configured to be housed in the capsule holder 7, such that the inlet surface 11 is arranged for receiving injection liquid from the feeding unit 3.

In Figure 2 a cross-sectional view along the longitudinal median axis of a part of the feeding unit 3 of the device 2 is shown, indicating wedge-shaped insertion means 12 enabling the insertion of the capsule holder 7 in the feeding unit 3 from its detached position into its operating or injection position in the feeding unit 3. The insertion means 12 comprises ribs 12a, 12b which are associated with guide grooves 13 which are wedge-shaped. In Figure 2 it can be seen that the feeding unit 3 comprises an injection needle 14 for supplying the injection fluid as a jet. The injection needle 14 is able to be moved relative to the capsule holder 7 from a rest position to an operating position, in the shown embodiment by rotation around the axis 15, although in other not-shown embodiments the needle can be moved by other devices such as a piston or the like.

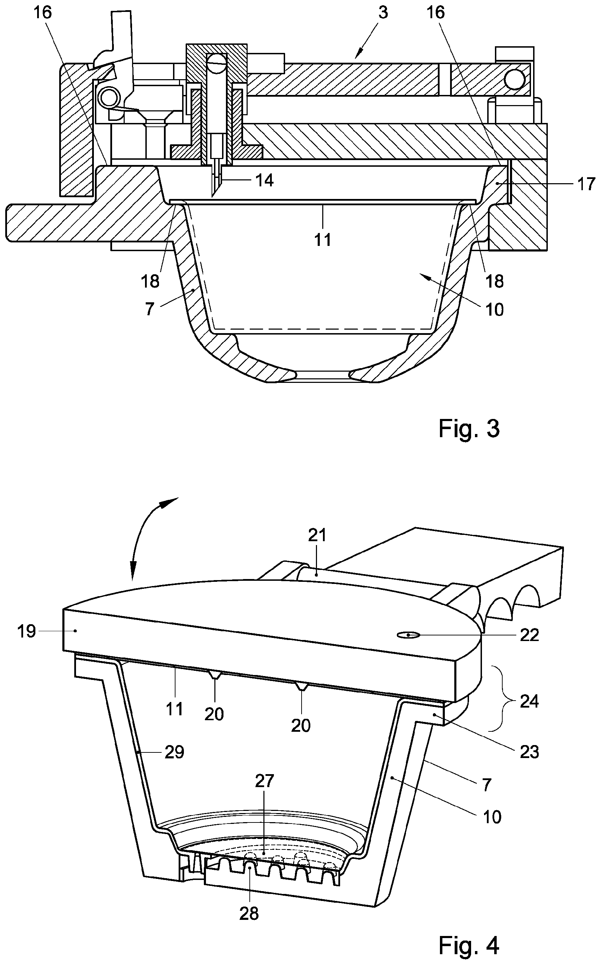

In Figure 3 a cross-sectional view along the longitudinal median axis of an embodiment of the system according to the invention is shown in which the feeding unit and the capsule holder 7 holding a capsule 10 are arranged in the operating position. In Figure 3 it clearly can be seen that the capsule holder 7 is provided with means so as to position the inlet surface 11 of the capsule 10 housed in the capsule holder 7 in the operating position in a horizontal position, and in addition the capsule holder 7 is configured so as to position the inlet surface 11 of the capsule 10 housed in the capsule holder 7 in the operating position at a position in which the inlet surface 11 is free from contact with the injection needle 14 when the latter is in the operating position.

As shown in Figure 3 the capsule holder 7 has a top surface 16 which, in the operating position of the capsule holder is in a horizontal position. This is realized in that the capsule holder 7 is provided with means so as to position the top surface in the operating position in a horizontal position, which means e.g. can be realized by insertion ribs and/or grooves 17 on the capsule holder 7 which counteract (or are not influenced by) the effect of the wedge-shaped insertion means of the feeding unit. In an exemplary embodiment the capsule holder 7 can be provided with supplementary insertion means comprising guiding ribs 17 having a constant thickness and / or guiding grooves having a constant dimension transverse to the direction of insertion into the feeding unit 3. Furthermore the capsule holder 7 can be provided with means 18, such as an annular shoulder, so as to position the inlet surface 11 of the capsule 10 housed in the capsule holder 7 in the operating position in a horizontal position.

Figure 4 is a cross-sectional view partly in perspective of an embodiment of the system in accordance with the invention in which the capsule holder 7 comprises a lid 19 having an injection member 20, in the shown embodiment in the form of outlet nozzles, for supplying the injection liquid to the capsule 10. The lid 19 is movable from a rest position in which a capsule 10 can be received in the capsule holder 7 to an operating position (shown in Figure 4) in which the lid 19 together with the capsule holder 7 enclose the capsule 10 housed in the capsule holder. This movement is indicated in Figure 4 by means of an arrow and in this embodiment is realized by a rotation about the hinge 21. The lid 19 is further arranged for receiving injection fluid from the injection needle 14 in the operating position e.g. by comprising an inlet hole 22 in which the injection needle 14 can be received.

In the embodiment shown in Figure 4 the lid 19 is hinged to the capsule holder 7, but in alternative embodiments (not-shown) the lid can be removable and/or detachable from the capsule holder.

Although in Figure 4 it is shown that the lid 19 overlies the capsule holder 7 and extends over the peripheral flange 23 thereof, in alternative embodiments the lid can be dimensioned such that it has a smaller diameter and in the operating position can lie on the shoulder 18 as shown in Figure 3.

As follows from Figure 4 it can be seen that the side edges of the lid form (or comprise) additional insertion means which, in the operating position of the lid 19 together with the supplementary insertion means of the capsule holder, in this case the side edge of the annular flange, form a combined insertion means 24 which are complementary to the wedge-shaped insertion means of the feeding unit.

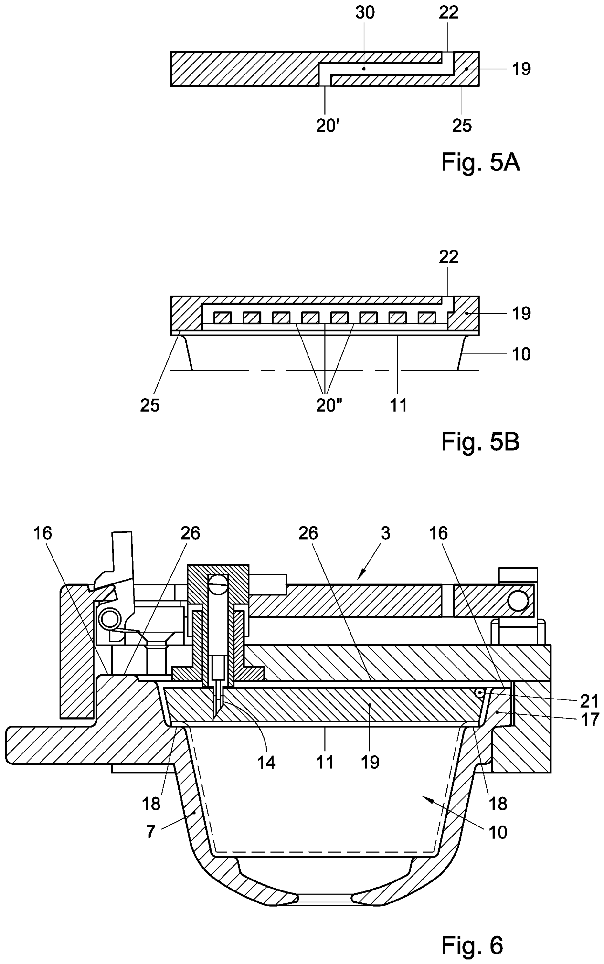

In Figure 5A a cross-sectional view of an embodiment of a lid of a capsule holder is schematically shown in which the injection member has a liquid inlet 22 also called an inlet hole communicating with a common manifold 30 opening into one injection hole 20' or, as shown in Figure 5B, more injection holes 20" opposite the liquid inlet 22. The liquid inlet 22 is positioned such that in the operating position of the lid 19 with regard to the capsule holder and in the operating position of the capsule holder in the feeding unit and in the operating position of the injection needle, the injection needle at least partly extends in the liquid inlet 22.

In the embodiment shown in Figure 5A in which the injection member has one injection hole 20', said injection hole 20' is in the operating position positioned in the extension of the centre of a capsule (not shown) housed in the capsule holder. The bottom surface 25 of the lid 19 is in this embodiment in the operating position in direct contact with the inlet surface of the capsule.

In the embodiment shown in Figure 5B at least one of the injection holes 20" (i.e. the central one) in the operating position is positioned in the extension of the centre of a capsule 10 housed in the capsule holder. The injection hole 20' or holes 20" are arranged such that the liquid dispensed therefrom is directed along or parallel to the axial axis of a capsule housed in the capsule holder.

Although in Figures 5A and 5B the jet coming from the injection needle is redirected using a manifold, said jet redirection element may, in other embodiments, be realized in another form. For example, the lid may be hollow and the jet redirection element may be formed by walls within the lid which are positioned under an angle with respect to the top and bottom surface of the lid. Said jet redirection element is then arranged such that the injection liquid is delivered at the centre of a capsule housed in the capsule holder and directed along the axial axis of the capsule.

From Figure 5B another feature of this embodiment of a system for preparing a liquid beverage from a capsule according to the invention is visible. This feature is that the injection member is configured such that in the operating position of the lid 19 with regard to the capsule holder and in the operating position of the capsule holder in the feeding unit and in the operating position of the injection needle it releases the injection liquid outside a capsule 10 housed in the capsule holder, in particular the injection member is configured for releasing the injection liquid above the capsule 10, i.e. in this embodiment above the inlet surface 11 of the capsule. Please note that for clarity reasons the capsule holder is not shown in Figures 5A and 5B but it is clear that the capsule holder is positioned below the bottom surface 25 of lid.

In the embodiment of a system according to the invention of which the feeding unit and the capsule holder and capsule are shown partly in cross-section in Figure 6 the feeding unit 3 of the device comprises an injection surface 26. Although the injection surface 26 is indicated as being flat it can in other embodiments be convex. In the shown operating position of the lid 19 with regard to the capsule holder 7 and in the operating position of the capsule holder 7 in the feeding unit 3 and in the operating position of the injection needle 14, the capsule holder 7 is sealed against the injection surface 26. In the embodiment shown in Figure 6 this is realized in that the (annular) top surface 16 seals against the injection surface 26. Please note that the top surface is part of an upstanding edge 17 (in this case also forming a guiding rib) separate from the lid, which is situated above a capsule when the capsule is housed in the capsule holder. In this embodiment in the operating position the lid 19 contacts the inlet surface 11 of the capsule 10. In this embodiment the capsule holder 7 furthermore comprises a lower portion 18 positioned in the operating position of the lid 19 with regard to the capsule holder 7 below the lid 19. In addition the capsule 10 comprises a flange (or in alternative embodiments a lower portion). In the operating position of the lid with regard to the capsule holder the lower portion 18 of the capsule holder 7 seals against the lid 19 of the capsule holder 7 and the lower portion 18 of the capsule holder 7 also seals against the flange (and/or lower portion) of the capsule.

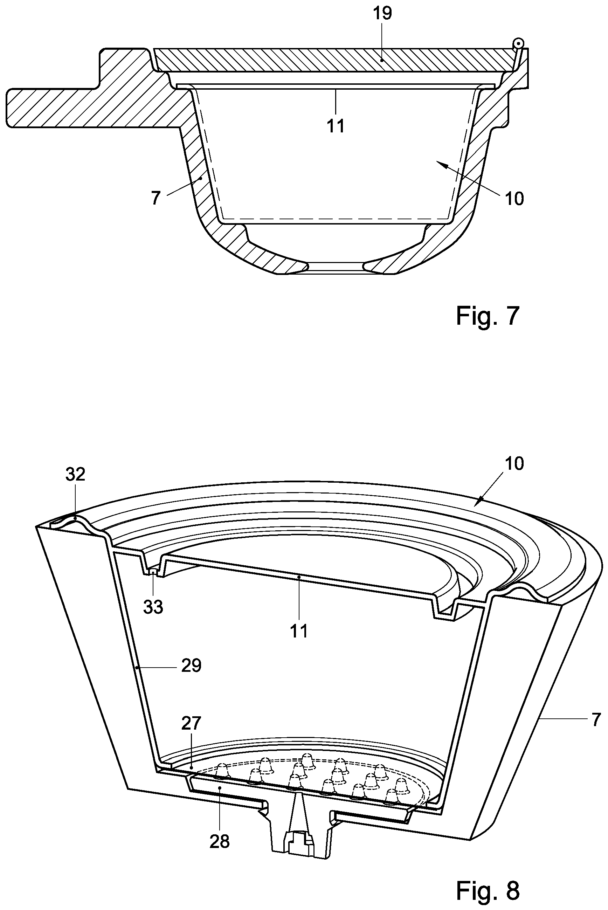

In the embodiment of Figure 7 the lid 19 is configured such that in the operating position of the lid 19 with regard to the capsule holder 7 the lid 19 is free from contact with the capsule 10 housed in the capsule holder 7 or the lid contacts the capsule in a non-sealing manner, e.g. by a number of fingers (not-shown) extending downwards from the lid towards the capsule.

In the embodiments shown in Figures 3, 6 and 7 in the operating position of the capsule holder in the feeding unit and in the operating position of the injection needle, the capsule housed in the capsule holder is free from contact with the injection surface 26 of the feeding unit.

The capsule 10 of the inventive system comprises an outlet face 27 opposite the capsule inlet surface 11 (Figures 4 and 8) and a cup 29 having an upper peripheral surface. As is shown in Figures 4 and 8 the capsule holder 7 comprises means 28, 28' for opening the outlet face 27 of the capsule by exerting an external force, such as a mechanical force or fluid pressure, on the outlet face 27 of the capsule 10. In the embodiment shown in Figure 4 said means 28 for opening the outlet face of the capsule is integrated in the capsule holder, while in the embodiment shown in Figure 8 said means 28' for opening the outlet face of the capsule is removably positionable in the capsule holder. As shown in both embodiments the means 28, 28' for opening the outlet face 27 of the capsule 10 by mechanical forces has the general shape of a contoured plate comprising protrusions, such as pyramids and/or points, frustums of pyramids, stepped pyramids or frustums thereof which extend towards the outlet face of the capsule. These means 28, 28" are arranged for providing an opening in the outlet face having a surface of at least 9 mm², preferable at least 12 mm², and most preferably of at least 15 mm².

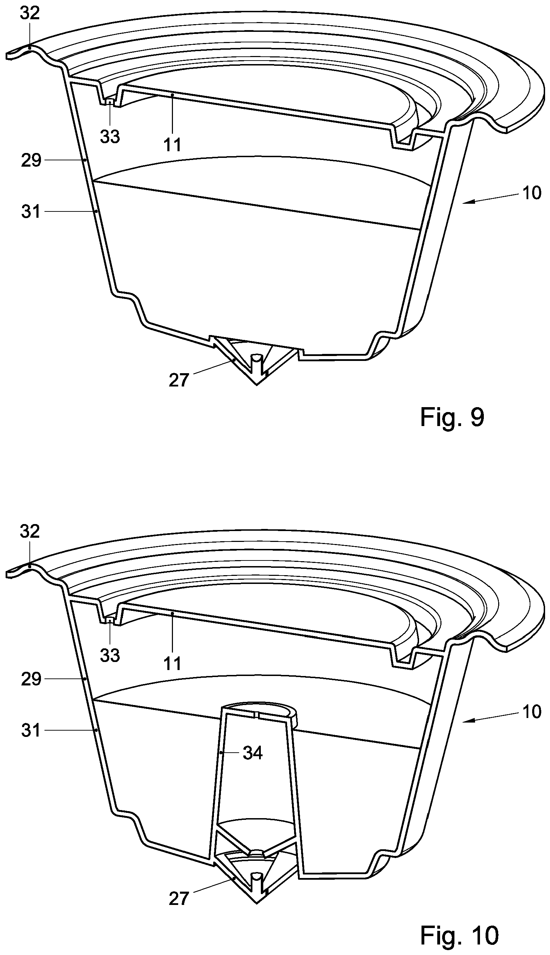

The capsule 10 shown in Figure 8 consists of the capsule inlet surface 11, the cup 29, the outlet face 27, and an extractable and/or soluble substance (for clarity reasons not depicted in Figure 8). This substance may be in the form of a liquid or in instant form. In Figures 9 and 10 which show alternative embodiments of the capsule 10 the substance 31 is indicated.

As can be seen in the embodiments of Figures 8, 9 and 10 the capsule inlet surface 11 is spaced from an upper peripheral surface 32 of the capsule 10 in the direction towards the outlet face 27, thus forming a lowered capsule inlet surface 11. In this way the capsule 10 is configured so as to position its inlet surface 11 when it is housed in the capsule holder in the operating position at a position in which the inlet surface 11 is free from contact with the injection needle when the latter is in the operating position. In addition the upper peripheral surface 32 can be used as sealing surface in the operating position of the capsule holder in the feeding unit.

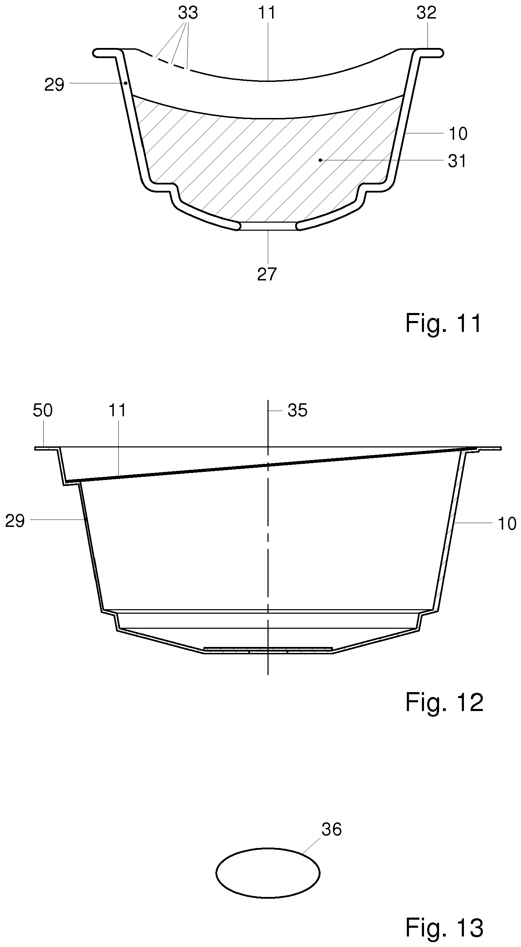

In an alternative embodiment 33 of a system in accordance with the invention shown in Figure 11 contact between the inlet surface 11 of the capsule 10 and the injection needle is prevented in that the capsule inlet surface 11 is concave.

In order to let liquid through to the interior of the capsule 10 the inlet surface 11 comprises one or a plurality of holes 33. The capsule inlet surface 11 of the embodiments of Figures 8 to 11 is rigid.

In the embodiments shown in Figures 9 and 10 the outlet face 27 of the capsule 10 is formed by a valve defining a relatively large outlet opening, in which in the embodiment shown in Figure 10 a central cone shaped element 34 is arranged above the valve.

In alternative (not-shown) embodiments the capsule inlet surface and/or the outlet face (or part thereof) can be arranged to be opened manually, e.g. by realizing them as tear away surfaces.

As described with reference to Figure 1 the system comprises decoding means 6 which are communicatively connected to the control unit 5 and which decoding means 6 are designed to read information from encoding means in order to for example enable the device to be operated. In accordance with the invention the system comprises separate or also called loose encoding means 36 (see Figure 13), which preferably is free from guiding means. Such encoding means may e.g. be formed by a relatively small magnet, in this case an elliptical magnet although other forms are suitable in other embodiments, which can be manually positioned by the user on or relative to the decoding means 6 such that the decoding means 6 is able to read information from the encoding means 36. In this case embodiments of a system for preparing a liquid beverage from a capsule according to the invention can be realized in which the capsule holder (or lid thereof) is free from such encoding means, such as a magnet.

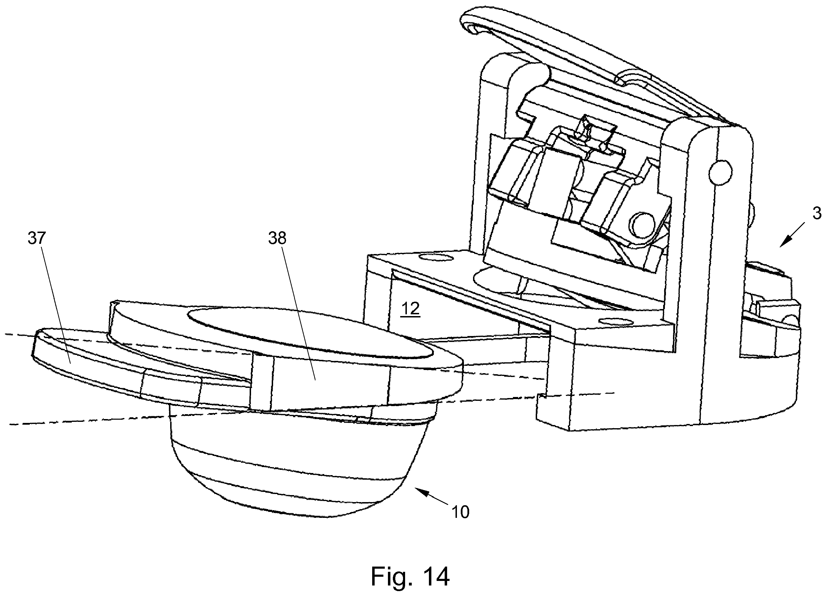

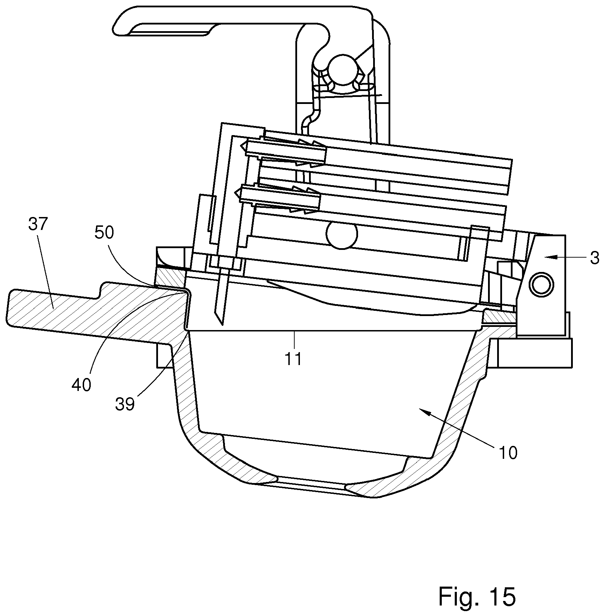

In Figure 14 a further embodiment of a system for preparing a liquid beverage from a capsule according to the invention is shown in which the feeding unit 3 and a second capsule holder 37 are shown. The second capsule holder 37 is detachable from the feeding unit 3 and movable from an operating position in the feeding unit 3 to a rest position outside the feeding unit 3. This second capsule holder 37 comprising complementary insertion means 38 which are configured to permit the insertion of the second capsule holder 37 from its rest position into its operating position in the feeding unit 3. These complementary insertion means 38 are complementary to the insertion means 12 of the feeding unit 3, in particular the complementary insertion means of the second capsule holder comprises ribs associated with guide grooves, which are wedge-shaped, substantially linear guides means. Although at least the capsules described above can be housed in this second capsule holder 37, it is preferred that another embodiment of a capsule 10 of a system for preparing a liquid beverage according to the invention as shown in cross-section in Figure 12 is used. The cup 29 of this capsule 10 defines an axial axis 35 and the capsule inlet surface 11 is inclined relative to this axial axis 35 such that the inlet surface 11 when it is housed in the capsule holder 37 is in a horizontal position when the capsule holder 37 is in the operating position as is shown in Figure 15. Please note that the inclination deviates from 90°. Thus not only this capsule is configured so as to position its inlet surface 11 when it is housed in the capsule holder in the operating position in a horizontal position, but also, as can be seen in Figure 15 the inlet surface 11 of the capsule is free from contact with the injection needle when in the operating position. In order to be able to house different kinds of capsules the second capsule holder 37 is provided with a number of annular shoulders 39, 40 on which flanges of the capsules can be supported. In the embodiment shown in Figure 15 the capsule of Figure 12 is used and the flange 50 of this capsule 10 rest on an upper shoulder 40 of the capsule holder 37 and is clamped between a part of the feeding unit 3 and the capsule holder 37, for realizing a proper seal during injection of water under pressure. In case a smaller capsule is used of which the flange rest on the lower shoulder 39 then a capsule holder can be used having an opening with a circumferential protruding edge, which opening is designed for receiving the smaller capsule and which circumferential edge has the same diameter as the capsule 10 of Figure 12 for providing a seal between the part of the feeding unit 3 and the capsule holder during operation. Alternatively the feeding unit can be provided with an additional ring or edge, e.g. movably arranged, for clamping the flange of the smaller capsule for realizing a proper seal.

Especially interesting for the consumer is a kit of parts comprising a package and one or more of the following items contained in said package: a capsule holder 7 e.g. as shown in any of the Figures 3 to 8 and 15; a first plurality of capsules e.g. as shown in any of the Figures 3, 4, 6 and 8 - 12; a separate or loose means for opening the outlet face of a capsule by mechanical forces having the general shape of a contoured plate comprising protrusions, e.g. as shown in Figure 8; and separate encoding means which is preferably free from guiding means, e.g. as shown in Figure 13.

## Claims

1. A system for preparing a liquid beverage from a capsule, said system comprising a device (2), the latter including:
- a feeding unit (3) for feeding injection fluid into the capsule (10), wherein said liquid is provided by a pump (4) of the device;
- a control unit (5) for controlling at least the pump of the device;
- decoding means (6) communicatively connected to the control unit and designed to read information from encoding means;
- said system further comprising a capsule holder (7) and a capsule comprising an inlet surface (11), said capsule holder being configured to so as to receive and support the capsule;
- said capsule being configured to be housed in the capsule holder, said inlet surface being arranged for receiving injection liquid from the feeding unit;
- said feeding unit comprising an injection needle (14) for supplying the injection fluid as a jet, said injection needle being able to move relative to the capsule holder from a rest position to an operating position;
- said capsule holder being detachable from the feeding unit and movable from an operating position in the feeding unit to a rest position outside the feeding unit;
- said feeding unit comprising insertion means (12) which permits the insertion of the capsule holder from its detached position into its operating position in the feeding unit, said insertion means comprises ribs (12a, 12b) which are associated with guide grooves (13) which are wedge-shaped, **characterized in that**,
said capsule holder (7) is configured so as to position the inlet surface of a capsule (10) housed in the capsule holder in the operating position at a position in which the inlet surface (11) is free from contact with the injection needle (14) when the latter is in the operating position.

2. A system for preparing a liquid beverage from a capsule according to claim 1, **characterized in that** the capsule holder is provided with supplementary insertion means comprising guiding ribs having a constant thickness and / or guiding grooves having a constant dimension transverse to the direction of insertion into the feeding unit.

3. A system for preparing a liquid beverage from a capsule according to claim 1 or 2, **characterized in that**, the capsule holder comprises a lid having an injection member, said lid being movable from a rest position in which a capsule can be received in the capsule holder to an operating position in which the lid together with the capsule holder encloses a capsule housed in the capsule holder, said lid being arranged for receiving injection fluid from the injection needle in the operating position, and said injection member supplying the injection liquid to the capsule.

4. A system for preparing a liquid beverage from a capsule according to claim 3, **characterized in that** said lid is hinged to the capsule holder.

5. A system for preparing a liquid beverage from a capsule according to claim 3 or 4, **characterized in that**, the lid is removable and/or detachable from the capsule holder.

6. A system for preparing a liquid beverage from a capsule according to any one of the claims 3 - 5 when dependent on claim 2, **characterized in that**, the lid comprises additional insertion means which, in the operating position of the lid together with the supplementary insertion means form a combined insertion means which are complementary to the insertion means of the feeding unit.

7. A system for preparing a liquid beverage from a capsule according to any one of claims 3 - 6, **characterized in that** said injection member has a liquid inlet and a jet redirection element, said liquid inlet being positioned such that in the operating position of the lid with regard to the capsule holder and in the operating position of the capsule holder in the feeding unit and in the operating position of the injection needle, the injection needle at least partly extends in the liquid inlet, said jet redirection element redirecting the jet such that the injection liquid is delivered at the centre of a capsule housed in the capsule holder and directed along the axial axis of the capsule.

8. A system for preparing a liquid beverage from a capsule according to any one of the claims 3 - 6, **characterized in that**, said injection member has a liquid inlet communicating with a common manifold opening into one or more injection holes opposite the liquid inlet, said liquid inlet being positioned such that in the operating position of the lid with regard to the capsule holder and in the operating position of the capsule holder in the feeding unit and in the operating position of the injection needle, the injection needle at least partly extends in the liquid inlet.

9. A system for preparing a liquid beverage from a capsule according to claim 8, **characterized in that**, said injection member has one injection hole, said injection hole in the operating position being positioned in the extension of the centre of a capsule housed in the capsule holder.

10. A system for preparing a liquid beverage from a capsule according to claim 8, **characterized in that**, said injection member has a plurality of injection holes, at least one of these injection holes in the operating position being positioned in the extension of the centre of a capsule housed in the capsule holder.

11. A system for preparing a liquid beverage from a capsule according to claim 9 or 10, **characterized in that**, the injection hole or holes are arranged such that the liquid dispensed therefrom is directed along or parallel to the axial axis of a capsule housed in the capsule holder.

12. A system for preparing a liquid beverage from a capsule according to any one of the claims 3 - 11, **characterized in that**, the injection member is configured such that in the operating position of the lid with regard to the capsule holder and in the operating position of the capsule holder in the feeding unit and in the operating position of the injection needle it releases the injection liquid outside a capsule housed in the capsule holder.

13. A system for preparing a liquid beverage from a capsule according to claim 12, **characterized in that**, the injection member is configured for releasing the injection liquid above the capsule.

## Patentansprüche

1. System zum Zubereiten eines flüssigen Getränks aus einer Kapsel, wobei das System eine Vorrichtung (2) umfasst, wobei Letztgenanntes beinhaltet:
- eine Zuführeinheit (3) zum Zuführen von Einspritzfluid in die Kapsel (10), wobei die Flüssigkeit durch eine Pumpe (4) der Vorrichtung bereitgestellt wird;
- eine Steuereinheit (5) zum Steuern zumindest der Pumpe der Vorrichtung;
- Decodiermittel (6), die zu Datenaustauschzwecken mit der Steuereinheit verbunden sind und ausgelegt sind, um Informationen von Codiermitteln zu lesen;
- wobei das System ferner einen Kapselhalter (7) und eine Kapsel umfasst, die eine Einlassoberfläche (11) umfasst, wobei der Kapselhalter konfiguriert ist, um die Kapsel aufzunehmen und zu halten;
- wobei die Kapsel konfiguriert ist, um im Kapselhalter untergebracht zu werden, wobei die Einlassoberfläche angeordnet ist, um Einspritzflüssigkeit von der Zuführeinheit aufzunehmen;
- wobei die Zuführeinheit eine Einspritznadel (14) zum Einspeisen des Einspritzfluids als Strahl umfasst, wobei die Einspritznadel in der Lage ist, sich im Verhältnis zum Kapselhalter aus einer Ruhestellung in eine Betriebsstellung zu bewegen;
- wobei der Kapselhalter von der Zuführeinheit lösbar und aus einer Betriebsstellung in der Zuführeinheit in eine Ruhestellung außerhalb der Vorschubeinheit beweglich ist;
- wobei die Zuführeinheit Einführungsmittel (12) umfasst, die das Einführen des Kapselhalters aus seiner gelösten Stellung in seine Betriebsstellung in der Zuführeinheit ermöglichen, wobei die Einführungsmittel Rippen (12a, 12b) umfassen, die mit Führungsnuten (13) versehen sind, die keilartig geformt sind, **dadurch gekennzeichnet, dass**
der Kapselhalter (7) konfiguriert ist, um die Einlassoberfläche einer im Kapselhalter untergebrachten Kapsel (10) in der Betriebsstellung zu positionieren, in der die Einlassoberfläche (11) nicht mit der Einspritznadel (14) in Kontakt steht, wenn sich Letztgenannte in der Betriebsstellung befindet.

2. System zum Zubereiten eines flüssigen Getränks aus einer Kapsel nach Anspruch 1, **dadurch gekennzeichnet, dass** der Kapselhalter mit ergänzenden Einführungsmitteln bereitgestellt ist, die Führungsrippen, die eine konstante Dicke aufweisen, und/oder Führungsnuten umfassen, die eine konstante Abmessung quer zur Einführungsrichtung in die Zuführungseinheit aufweisen.

3. System zum Zubereiten eines flüssigen Getränks aus einer Kapsel nach Anspruch 1 oder 2, **dadurch gekennzeichnet, dass** der Kapselhalter einen Deckel umfasst, der ein Einspritzelement aufweist, wobei der Deckel aus einer Ruhestellung, in der eine Kapsel im Kapselhalter aufgenommen werden kann, in eine Betriebsstellung beweglich ist, in der der Deckel zusammen mit dem Kapselhalter eine im Kapselhalter untergebrachte Kapsel umschließt, wobei der Deckel angeordnet ist, um in der Betriebsstellung Einspritzfluid von der Injektionsnadel aufzunehmen, und wobei das Einspritzelement das Einspritzfluid in die Kapsel einspeist.

4. System zum Zubereiten eines flüssigen Getränks aus einer Kapsel nach Anspruch 3, **dadurch gekennzeichnet, dass** der Deckel am Kapselhalter angelenkt ist.

5. System zum Zubereiten eines flüssigen Getränks aus einer Kapsel nach Anspruch 3 oder 4, **dadurch gekennzeichnet, dass** der Deckel vom Kapselhalter entfernbar und/oder lösbar ist.

6. System zum Zubereiten eines flüssigen Getränks aus einer Kapsel nach einem der Ansprüche 3 bis 5 bei Abhängigkeit von Anspruch 2, **dadurch gekennzeichnet, dass** der Deckel zusätzliche Einführungsmittel umfasst, die in der Betriebsstellung des Deckels zusammen mit den ergänzenden Einführungsmitteln kombinierte Einführungsmittel bilden, die zu den Einführungsmitteln der Zuführeinheit komplementär sind.

7. System zum Zubereiten eines flüssigen Getränks nach einem der Ansprüche 3 bis 6, **dadurch gekennzeichnet, dass** das Einspritzelement einen Flüssigkeitseinlass und ein Strahlumlenkelement aufweist, wobei der Flüssigkeitseinlass so positioniert ist, dass sich die Einspritznadel in der Betriebsstellung des Deckels in Bezug auf den Kapselhalter und in der Betriebsstellung des Kapselhalters in der Zuführeinheit und in der Betriebsstellung der Einspritznadel zumindest teilweise in den Flüssigkeitseinlass erstreckt, wobei das Strahlumlenkelement den Strahl so umlenkt, dass die Einspritzflüssigkeit in der Mitte einer in der Kapselhalterung untergebrachten Kapsel abgegeben und entlang der Axialachse der Kapsel gerichtet ist.

8. System zum Zubereiten eines flüssigen Getränks nach einem der Ansprüche 3 bis 6, **dadurch gekennzeichnet, dass** das Einspritzelement einen Flüssigkeitseinlass aufweist, der in Verbindung mit einer gemeinsamen Verteileröffnung in ein oder mehrere Einspritzlöcher gegenüber dem Flüssigkeitseinlass in Verbindung steht, wobei der Flüssigkeitseinlass so positioniert ist, dass sich die Einspritznadel in der Betriebsstellung des Deckels in Bezug auf den Kapselhalter und in der Betriebsstellung des Kapselhalters in der Zuführeinheit und in der Betriebsstellung der Einspritznadel zumindest teilweise in den Flüssigkeitseinlass erstreckt.

9. System zum Zubereiten eines flüssigen Getränks aus einer Kapsel nach Anspruch 8, **dadurch gekennzeichnet, dass** das Einspritzelement ein Einspritzloch aufweist, wobei das Einspritzloch in der Betriebsstellung in der Verlängerung der Mitte einer im Kapselhalter untergebrachten Kapsel positioniert ist.

10. System zum Zubereiten eines flüssigen Getränks aus einer Kapsel nach Anspruch 8, **dadurch gekennzeichnet, dass** das Einspritzelement eine Vielzahl von Einspritzlöchern aufweist, wobei mindestens eines dieser Einspritzlöcher in der Betriebsstellung in der Verlängerung der Mitte einer im Kapselhalter untergebrachten Kapsel positioniert ist.

11. System zum Zubereiten eines flüssigen Getränks aus einer Kapsel nach Anspruch 9 oder 10, **dadurch gekennzeichnet, dass** das Einspritzloch oder die Einspritzlöcher so angeordnet sind, dass die daraus abgegebene Flüssigkeit entlang der oder parallel zur Axialachse einer im Kapselhalter untergebrachten Kapsel gerichtet ist.

12. System zum Zubereiten eines flüssigen Getränks aus einer Kapsel nach einem der Ansprüche 3 bis 11, **dadurch gekennzeichnet, dass** das Einspritzelement so konfiguriert ist, dass es in der Betriebsstellung des Deckels in Bezug auf den Kapselhalter und in der Betriebsstellung des Kapselhalters in der Zuführeinheit und in der Betriebsstellung der Einspritznadel die Einspritzflüssigkeit außerhalb einer im Kapselhalter untergebrachten Kapsel freisetzt.

13. System zum Herstellen eines flüssigen Getränks aus einer Kapsel nach Anspruch 12, **dadurch gekennzeichnet, dass** das Einspritzelement konfiguriert ist, um die Einspritzflüssigkeit über der Kapsel freizusetzen.

## Revendications

1. Système de préparation d'une boisson liquide à partir d'une capsule, ledit système comprenant un dispositif (2), celui-ci incluant :
- une unité d'alimentation (3) pour alimenter un fluide d'injection dans la capsule (10), dans lequel ledit liquide est fourni par une pompe (4) du dispositif ;
- une unité de commande (5) pour commander au moins la pompe du dispositif ;
- un moyen de décodage (6) connecté de manière communicative à l'unité de commande et conçu pour lire des informations à partir de moyens de codage ;
- ledit système comprenant en outre un support de capsule (7) et une capsule comprenant une surface d'entrée (11), ledit support de capsule étant conçu de façon à recevoir et supporter la capsule ;
- ladite capsule étant conçue pour être logée dans le support de capsule, ladite surface d'entrée étant agencée pour recevoir un liquide d'injection depuis l'unité d'alimentation ;
- ladite unité d'alimentation comprenant une aiguille d'injection (14) pour fournir le fluide d'injection sous la forme d'un jet, ladite aiguille d'injection pouvant se déplacer par rapport au support de capsule d'une position de repos à une position de fonctionnement ;
- ledit support de capsule étant détachable de l'unité d'alimentation et mobile d'une position de fonctionnement dans l'unité d'alimentation à une position de repos à l'extérieur de l'unité d'alimentation ;
- ladite unité d'alimentation comprenant des moyens d'insertion (12) qui permettent l'insertion du support de capsule de sa position détachée dans sa position de fonctionnement dans l'unité d'alimentation, lesdits moyens d'insertion comprenant des nervures (12a, 12b) qui sont associées à des rainures de guidage (13) qui sont en forme de coin, **caractérisé en ce que**,
ledit support de capsule (7) est conçu de façon à positionner la surface d'entrée d'une capsule (10) logée dans le support de capsule dans la position de fonctionnement à une position dans laquelle la surface d'entrée (11) n'est pas en contact avec l'aiguille d'injection (14) lorsque celle-ci est en position de fonctionnement.

2. Système de préparation d'une boisson liquide à partir d'une capsule selon la revendication 1, **caractérisé en ce que** le support de capsule est muni de moyens d'insertion supplémentaires comprenant des nervures de guidage ayant une épaisseur constante et/ou des rainures de guidage ayant une dimension constante transversalement à la direction d'insertion dans l'unité d'alimentation.

3. Système pour la préparation d'une boisson liquide à partir d'une capsule selon la revendication 1 ou 2, **caractérisé en ce que** le support de capsule comprend un couvercle ayant un élément d'injection, ledit couvercle pouvant être déplacé depuis une position de repos dans laquelle une capsule peut être reçue dans le support de capsule jusqu'à une position de fonctionnement dans laquelle le couvercle, conjointement avec le support de capsule, renferme une capsule logée dans le support de capsule, ledit couvercle étant agencé pour recevoir du fluide d'injection depuis l'aiguille d'injection dans la position de fonctionnement et ledit élément d'injection fournissant le liquide d'injection à la capsule.

4. Système pour la préparation d'une boisson liquide à partir d'une capsule selon la revendication 3, **caractérisé en ce que** ledit couvercle est articulé au support de capsule.

5. Système de préparation d'une boisson liquide à partir d'une capsule selon la revendication 3 ou 4, **caractérisé en ce que** le couvercle est amovible et/ou détachable du support de capsule.

6. Système de préparation d'une boisson liquide à partir d'une capsule selon l'une quelconque des revendications 3 à 5 lorsqu'elle dépend de la revendication 2, **caractérisé en ce que** le couvercle comprend des moyens d'insertion supplémentaires qui, en position de fonctionnement du couvercle conjointement avec les moyens d'insertion supplémentaires, forment des moyens d'insertion combinés complémentaires des moyens d'insertion de l'unité d'alimentation.

7. Système pour la préparation d'une boisson liquide à partir d'une capsule selon l'une quelconque des revendications 3 à 6, **caractérisé en ce que** ledit élément d'injection a une entrée de liquide et un élément de redirection de jet, ladite entrée de liquide étant positionnée de telle sorte que dans la position de fonctionnement du couvercle par rapport au support de capsule et dans la position de fonctionnement du support de capsule dans l'unité d'alimentation et dans la position de fonctionnement de l'aiguille d'injection, l'aiguille d'injection s'étend au moins partiellement dans l'entrée de liquide, ledit élément de redirection de jet redirige le jet d'injection de telle sorte que le liquide est délivré au centre d'une capsule logée dans le support de capsule et dirigé le long de l'axe axial de la capsule.

8. Système de préparation d'une boisson liquide à partir d'une capsule selon l'une quelconque des revendications 3 à 6, **caractérisé en ce que** ledit élément d'injection comporte une entrée de liquide communiquant avec un collecteur commun débouchant dans un ou plusieurs trous d'injection opposés à l'entrée de liquide, ladite entrée de liquide étant positionnée de telle sorte que dans la position de fonctionnement du couvercle par rapport au support de capsule et dans la position de fonctionnement du support de capsule dans l'unité d'alimentation et dans la position de fonctionnement de l'aiguille d'injection, l'aiguille d'injection s'étend au moins partiellement dans l'entrée de liquide.

9. Système pour la préparation d'une boisson liquide à partir d'une capsule selon la revendication 8, **caractérisé en ce que** ledit élément d'injection a un orifice d'injection, ledit orifice d'injection dans la position de fonctionnement étant positionné dans le prolongement du centre d'une capsule logée dans le support de capsule.

10. Système pour la préparation d'une boisson liquide à partir d'une capsule selon la revendication 8, **caractérisé en ce que** ledit élément d'injection comporte une pluralité d'orifices d'injection, au moins l'un de ces orifices d'injection dans la position de fonctionnement étant positionné dans le prolongement du centre d'une capsule logée dans le support de capsule.

11. Système pour la préparation d'une boisson liquide à partir d'une capsule selon la revendication 9 ou 10, **caractérisé en ce que** le ou les orifices d'injection sont agencés de sorte que le liquide distribué à partir de ceux-ci est dirigé le long de l'axe axial ou parallèle à celui-ci d'une capsule logée dans le support de capsule.

12. Système pour la préparation d'une boisson liquide à partir d'une capsule selon l'une quelconque des revendications 3 à 11, **caractérisé en ce que** l'élément d'injection est conçu de telle sorte que dans la position de fonctionnement du couvercle par rapport au support de capsule et dans la position de fonctionnement du support de capsule dans l'unité d'alimentation et dans la position de fonctionnement de l'aiguille d'injection, il libère le liquide d'injection à l'extérieur d'une capsule logée dans le support de capsule.

13. Système de préparation d'une boisson liquide à partir d'une capsule selon la revendication 12, **caractérisé en ce que** l'élément d'injection est conçu pour libérer le liquide d'injection au-dessus de la capsule.
